# EUROPÄISCHE PATENTSCHRIFT

(11) **EP 1 046 775 B1**
(45) Veröffentlichungstag und Bekanntmachung des Hinweises auf die Patenterteilung: **22.09.2010**
(21) Anmeldenummer: 00108408.6
(22) Anmeldetag: 17.04.2000
(51) Int. Cl.: G05B 19/39, G05B 19/416, E05F 15/10

(54) **Antriebseinheit für ein Tor**
Drive unit for a door
Unité d'entraînement pour une porte

(43) Veröffentlichungstag der Anmeldung: 25.10.2000
(73) Patentinhaber: Novoferm tormatic GmbH, 44309 Dortmund (DE)
(72) Erfinder: Ginzel, Lothar, 58239 Schwerte (DE); Theile, Ulrich, 58091 Hagen (DE)

(56) Entgegenhaltungen:
- EP-A- 0 677 475
- DE-A- 19 750 304
- DE-C- 19 523 210
- US-A- 4 558 591
- US-A- 5 371 460

## Beschreibung

Die Erfindung betrifft eine Antriebseinheit für ein Tor gemäß dem Patentanspruch 1 sowie ein Verfahren zum Betrieb einer Antriebseinheit gemäß dem Patentanspruch 8. Bei derartigen Antriebseinheiten wird ein elektromechanischer Antriebsmotor mit einem Getriebe und einer Steuerung verwendet. Dabei ist an der Abtriebsachse des Getriebes die Antriebsvorrichtung für das Tor in Form von Ketten, Seilen oder Zahnriemen über entsprechende Antriebsräder befestigt. Derartige Tore sind mit Positionserfassungseinrichtungen ausgebildet, damit z. B. die Endpositionen "Tor zu" bzw. "Tor auf" erkannt werden können.

Aus der Praxis bekannte Antriebseinheiten sind mit so genannten Inkrementalgebem ausgerüstet, um die Position des Tores zu erfassen und die Antriebseinheit zu steuern. Steuerungstechnisch ist ein Referenzwert erforderlich, um eine eindeutige Positionserfassung zu ermöglichen. Dieser Referenzwert wird an den oben genannten Antriebsvorrichtungen ermittelt und an die Steuerung übertragen. Der Aufbau der Steuerung ist also dezentral und entsprechend aufwendig. Die Übertragungsstrecke für den Referenzwert stellt eine potentielle Fehlerquelle dar.

Darüber hinaus ist in der EP 0 500 984 B1 eine Antriebseinheit mit vier Endschaltern für einen Garagentorantrieb beschrieben. Dabei ist die aus dem Getriebe austretende Abtriebswelle mit einem Ritzel versehen, welches zum einen die umlaufende Kette antreibt und zum anderen so gestaltet ist, dass aufgrund einer Kegelverzahnung ein Kegelritzel der Endschaltereinheit gleichzeitig mit angetrieben wird. Diese Endschaltereinheit sitzt somit neben der Abtriebswelle und besteht im Wesentlichen aus einer Gewindespindel, die mit Einstellmuttern versehen ist. Festgesetzt werden die Einstellmuttern durch eine Haltemöglichkeit, so dass beim Drehen der Abtriebswelle gleichzeitig auch die Spindel verdreht wird und somit die Einstellmuttern entlang der Gewindespindel geführt werden und aufgrund der gewählten Position mit den Endschaltern den entsprechenden Kontakt auslösen können.

Eine Betätigungseinrichtung für elektromotorisch bewegbare Teile von Kraftfahrzeugen mit einem inkrementellen Istwertgeber für die tatsächliche Position des bewegten Teiles wird in der DE 195 23 210 C1 offenbart. Der Istwertgeber erzeugt dabei ein erstes und ein zweites Signal.

Eine weitere Endschaltereinheit ist der DE 41 06 149 A1 zu entnehmen. Diese Endschaltereinheit besteht im Wesentlichen auch aus einer Gewindespindel, auf der sich entsprechend veränderliche Einstellmuttern befinden. An der Gewindespindel ist darüber hinaus eine winkelförmig angeordnete Kegelrad-Antriebsvorrichtung vorhanden, die über eine separate Welle dann mit der Abtriebsachse des Getriebes über Zahnräder miteinander verbunden ist.

Die Positionsbestimmung des Tores erfolgt in beiden Veröffentlichungen ausschließlich an einigen exakt definierten Stellen, vorzugsweise in der jeweiligen Endposition, über die Endschalter, aufgrund dessen die Antriebseinheit automatisch an- oder abgeschaltet wird. Steuerungstechnisch werden also nur diese Informationen bzw. Positionen des Tores an eine elektronische Steuerungseinheit weitergegeben und dort verwertet. Zwischenpositionen können weder detektiert noch kontrolliert werden, so dass keine Möglichkeit gegeben ist, den Bewegungsablauf des Tores zu beeinflussen. Die Lage der Endschalter kann nur manuell variiert werden, z. B. während der Erstmontage oder während eines Wartungsintervalles.

Alle vorbeschriebenen Systeme haben also hinsichtlich einer kontinuierlichen Positionserfassung Nachteile. Darüber hinaus entstehen durch die Verwendung mechanischer Systeme große herstellungs- und funktionstechnisch entsprechend aufwendige Systeme, die im Rahmen des ständigen Bestrebens nach hohen Packungsdichten unvorteilhaft sind. Des Weiteren ist die universelle Verwendbarkeit mechanischer Bauteile durch deren physikalische Grenzen erheblich eingeschränkt.

Die Aufgabe der Erfindung besteht darin, eine Antriebseinheit zu schaffen, die eine komfortable Steuerung aufweist, die universell in verschiedensten Tortypen einsetzbar ist. Darüber hinaus soll der fertigungs- und montagetechnische Aufwand verringert und die Abmessungen minimiert werden.

Gelöst wird diese Aufgabe mit den Merkmalen der Patentansprüche 1 und 8. Vorteilhafte Ausgestaltungen sind in den Unteransprüchen angegeben.

Der Gegenstand des Patentanspruches 1 weist den Vorteil auf, dass der Bewegungsablauf eines Tores vollständig detektierbar ist und die Daten in einer Positionserfassungseinrichtung zentral erfasst und weiterverarbeitet werden können. Mit den Daten können verschiedene Parameter kontrolliert und beeinflusst werden. Es ist jederzeit möglich, die absolute Position zu ermitteln und die Geschwindigkeit des Tores zu beeinflussen. Darüber hinaus kann die Drehrichtung detektiert werden. Anhand dieser Parameter kann die Steuerung des Tores komplexer ausgestaltet und unter sicherheitsrelevanten Aspekten verbessert werden. Die erfassten Daten können zur Realisierung von Komfortfunktionen verwandt werden. Durch die Positionserfassung ist auch bei einer kurzzeitigen Störung oder Unterbrechung das ablaufgerechte Einsetzen bzw. Fortsetzen eines Bewegungszyklusses gewährleistet. Bisherige Lösungen sind kompliziert und hinsichtlich der Steuerung mit aufwendigen mechanischen Systemen realisiert. Darüber hinaus braucht die Endabschaltung der Tore nicht mehr mechanisch justiert werden, sondern kann über die elektronische Steuerungseinheit der Positionserfassungseinrichtung programmiert werden. Andere Parameter und Funktionen (Öffnungsgeschwindigkeit, Öffnungszeit, Schließgeschwindigkeit, Schließzeit) werden durch die Verarbeitung der Daten in einem Mikroprozessor, der elektronischen Steuerungseinheit, vereinfacht. Insbesondere die Erfassung von Parametern und die bewegungstechnische Umsetzung entsprechender Funktionen kann mit geringem Aufwand realisiert werden. Die bisherigen Endschalter entfallen.

Die Positionserfassungseinrichtung setzt sich aus einem Informationsgeber und der elektronischen Steuerungseinheit zusammen. Der Informationsgeber besteht aus einem Abtastsystem, das in der elektronischen Steuerungseinheit angeordnet ist, und aus einem Informationsträger, der zentrisch an der Abtriebsachse befestigt ist. Über den Umfang des Informationsträgers sind gleiche Informationsinhalte in gleichmäßigen Abständen ausgebildet, wobei entweder durch einen ungleichmäßigen Informationsinhalt oder durch einen ungleichmäßigen Abstand eine eindeutige Erkennung einer vollständigen Umdrehung des Informationsträgers möglich ist. Diese "Fehlstelle" stellt eine Diskontinuität dar, die in beiden Drehrichtungen zählbar ist. Das Funktionsprinzip der Positionserfassungseinrichtung beruht darauf, dass pro Umdrehung des Informationsträgers ein in der zeitlichen Länge veränderter Impuls entsteht. Die Ermittlung der Drehzahl erfolgt über die jeweilige gültige Flanke in Abhängigkeit von der Drehrichtung. Innerhalb einer festgelegten Toleranz der Drehzahl wird der zeitlich veränderte Impuls durch einen Filter erfasst. Ist dieser Impuls erfasst worden, wird die aktuelle Position kontrolliert und gegebenenfalls korrigiert. Durch zyklisches Abspeichern der Position, aber mindestens einmal pro Umdrehung, in einem nicht flüchtigen Speicher ist die genaue Position auch nach einem Stromausfall wieder zu erfassen. Beim ersten Anlaufen wird die genaue Position durch eine Lernfahrt ermittelt.

Der Informationsgeber kann durch einen Inkrementalgeber gebildet werden, der aus einer Lichtschranke, die in der elektronischen Steuerungseinheit angeordnet ist, und aus einem Informationsträger, der zentrisch an der Abtriebsachse befestigt ist, bestehen. Der Inkrementalgeber ist in die elektronische Steuerungseinheit integriert, wobei die Abtriebsachse die elektronische Steuerungseinheit senkrecht durchdringt. Die Abtriebsachse ist beidseitig aus dem Getriebe herausgeführt. Die elektronische Steuerungseinheit einschließlich des Inkrementalgebers ist als auswechselbares Modul an einer Seite der Abtriebsachse angeordnet, während auf der anderen Seite der Abtriebsachse die Antriebsvorrichtung für das Tor angekoppelt ist.

Der Informationsträger kann in verschiedenen Formen ausgeführt sein, wobei scheibenförmige, kranzförmige oder topfförmige Ausführungsformen, die zentrisch an der Abtriebsachse befestigt sind, zu bevorzugen sind. Am Umfang dieses Informationsträgers sind Informationsinhalte in Form vorstehender und beabstandeter Glieder verteilt, die sich z. B. abschnitts- oder segmentweise in der Ebene oder senkrecht zur Ebene des Informationsträgers erstrecken. Denkbar sind insbesondere Zähne, die durch Nuten beabstandet sind. Weiterhin sind auch nasenartige oder nockenartige Vorsprünge denkbar. Grundsätzlich muss gewährleistet sein, dass durch den Informationsinhalt ein detektierbares Signal in einem Abtastsystem, z. B. einer Lichtschranke, hervorgerufen wird.

Der Informationsträger ist als separates Bauelement, vorzugsweise in Form eines Kranzes, drehfest an der Abtriebsachse angeordnet. Insbesondere die Ausbildung als separates Bauelement ermöglicht den einfachen Austausch eines beispielsweise defekten oder anders dimensionierten Informationsträgers. Der einfache Aufbau der Positionserfassungseinrichtung verringert die Anzahl der Bauteile und dadurch den Fertigungs- und Montageaufwand. Des Weiteren ist die Positionserfassungseinrichtung aufgrund weniger zusammenarbeitender Bauteile robust und unempfindlich gegenüber Funktionsstörungen. Die zur Steuerung der Antriebseinheit notwendigen Bauteile sind zentral angeordnet und somit einfach zugänglich. Der Informationsträger ist lösbar an der Abtriebsachse befestigt und kann ebenso wie die elektronische Steuerungseinheit einschließlich einer Gabellichtschranke, z. B. im Rahmen von Wartungs- oder Reparaturarbeiten, entfernt bzw. ausgewechselt werden.

Dieses Prinzip ist eine besonders kostengünstige Lösung für Torantriebe jedweder Art. Als Tore werden hierbei alle verfahrbaren Elemente, wie z. B. Türen, Flügel, Wände etc., verstanden, die Gebäudeöffnungen verschließen oder Räume bzw. Bereiche zumindest teilweise unterteilen. Hauptsächlich aber nicht ausschließlich werden die Elemente in horizontaler oder vertikaler Richtung verfahren. Die erfindungsgemäße Antriebseinheit eignet sich für die Verwendung in Garagentorantrieben, Schiebetürantrieben oder Schiebewandantrieben. Neben der Erfassung der Endlagen können Drehzahlregelungen, Fahrrampen und andere Funktionen mit geringfügigem Aufwand gelöst werden.

Die Erfindung wird anhand zweier schematisch dargestellter Ausführungsbeispiele näher erläutert.

Es zeigen:
- Figur 1:: Eine Seitenansicht einer Antriebseinheit,

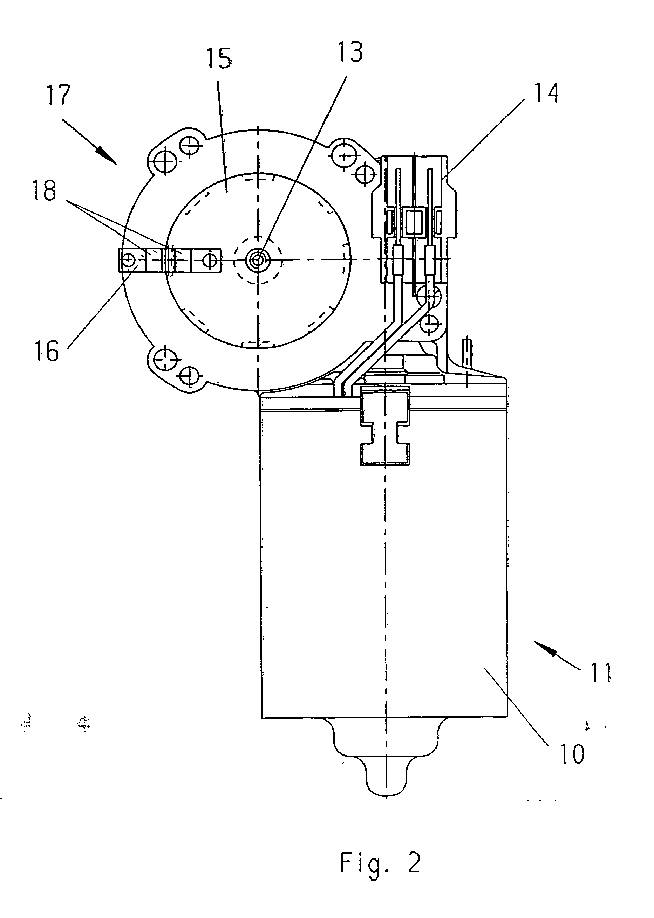

- Figur 2:: eine Draufsicht einer Antriebseinheit gemäß Figur 1,
- Figur 3:: ein Ausführungsbeispiel eines Informationsträgers eines In- formationsgebers in einer Draufsicht.
- Figur 4:: eine zeitliche Darstellung einer vollständigen Umdrehung des Informationsträgers gemäß Figur 3.
- Figur 5: eine zeitliche Darstellung einer vollständigen Umdrehung entgegen der Drehrichtung gemäß Figur 4.
- Figur 6:: ein weiteres Ausführungsbeispiel eines Informationsträgers eines Informationsgebers in einer Draufsicht,
- Figur 7:: eine zeitliche Darstellung einer vollständigen Umdrehung des Informationsträgers gemäß Figur 6 und
- Figur 8:: eine zeitliche Darstellung einer vollständigen Umdrehung entgegen der Drehrichtung gemäß Figur 7.

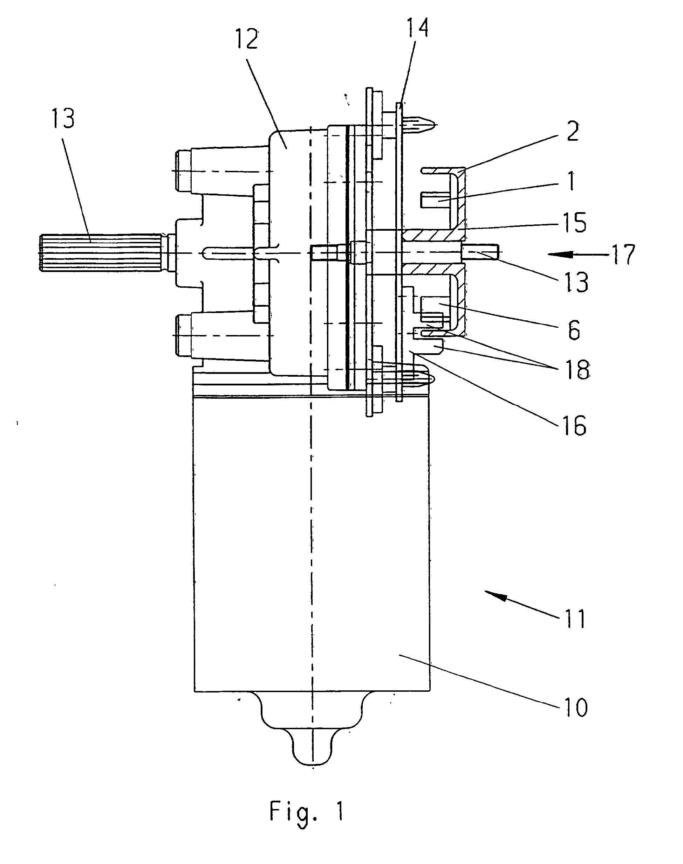

Ein Antriebsmotor 10 einer Antriebseinheit 11, z. B. für ein Garagentor (nicht dargestellt), ist mit einem Getriebe 12 in der Art verbunden, dass eine Abtriebsachse 13 des Getriebes 12 um 90° zur Rotorwelle des Antriebsmotors 10 versetzt angeordnet ist. Die Abtriebsachse 13 ist beiderseits aus dem Getriebe 12 geführt. Auf einer Seite des Getriebes 12 sind die nicht dargestellten Antriebsvorrichtungen angekoppelt, während sich auf der gegenüberliegenden Seite eine Positionserfassungseinrichtung, bestehend aus einem als Inkrementalgeber ausgeführten Informationsgeber 17 und einer elektronischen Steuerungseinheit 14, befindet. Die Abtriebsachse 13 durchdringt dabei die elektronische Steuerungseinheit 14. Am diesseitigen Ende der Abtriebsachse 13 ist ein Informationsträger 15 angeordnet, der zusammen mit einem auf der elektronischen Steuerungseinheit 14 befindlichen Abtastsysteme 16 den Informationsgeber 17 bildet. Das Abtastsystem ist in Form einer Gabellichtschranke 16 ausgebildet und mit nicht näher dargestellten Bauelementen auf der elektronischen Steuerungseinheit 14 leitend verbunden. Der Informationsträger ist als topfförmiger Zahnkranz 15 ausgebildet und drehfest auf der Abtriebsachse 13 befestigt. Der Zahnkranz 15 weist Informationsinhalte auf, die in der Figur 1 als nach unten abgewinkelte Zähne 1 bis 8 ausgebildet sind, die sich bei Drehung der Abtriebsachse 13 durch Schenkel 18 der Gabellichtschranke 16 bewegen. Der Zahnkranz 15 weist mehrere gleichmäßig beabstandete und gleichförmig ausgebildete Zähne 2 bis 8 und einen ungleichmäßig beabstandeten und ungleichmäßig ausgebildeten Zahn 1 auf.

Die zur Steuerung der Antriebseinheit 11 notwendigen Bauteile sind zentral angeordnet und somit einfach zugänglich. Der Zahnkranz 15 ist lösbar an der Abtriebsachse 13 befestigt und kann ebenso wie die elektronische Steuerungseinheit 14 einschließlich der Gabellichtschranke 16, z. B. im Rahmen von Wartungs- oder Reparaturarbeiten, entfernt bzw. ausgewechselt werden.

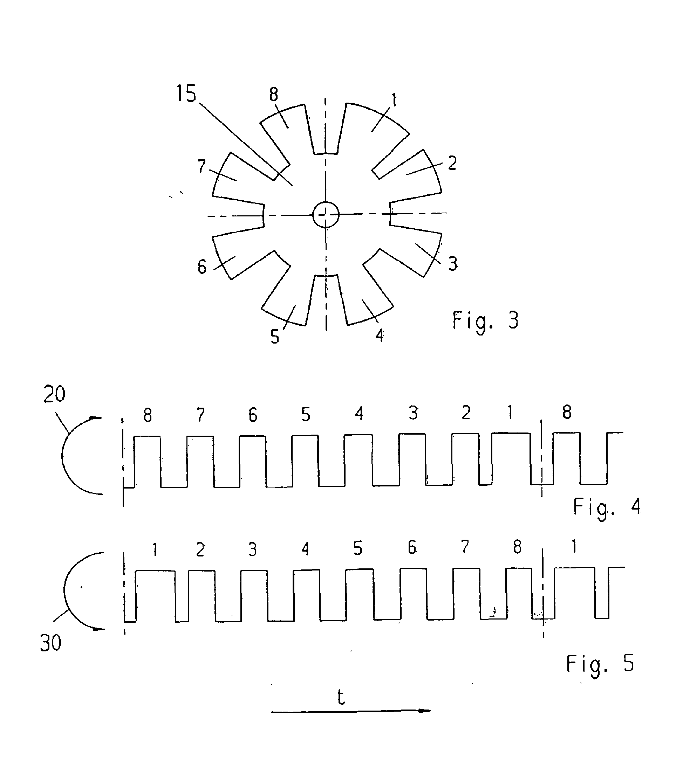

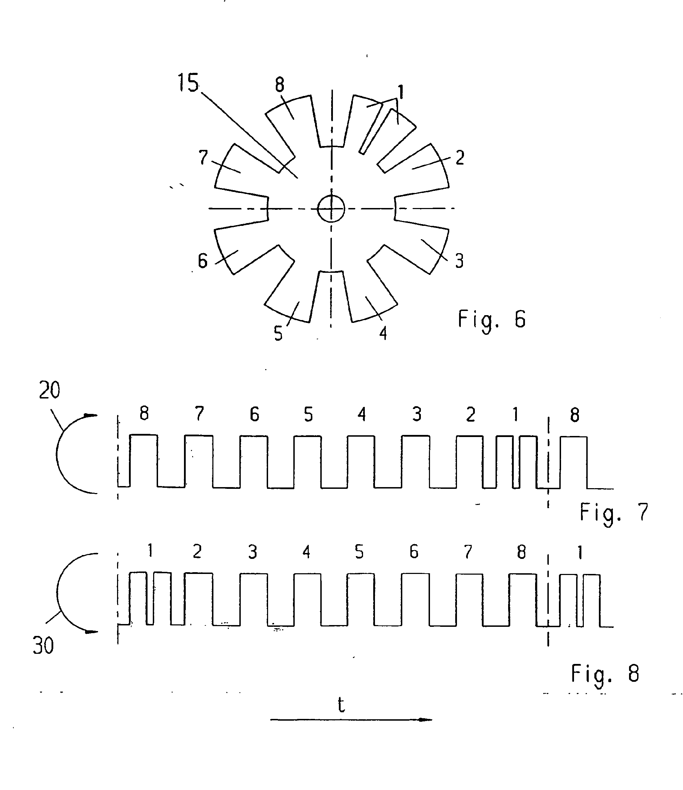

In den Figuren 3 und 6 sind Ausführungsbeispiele von scheibenförmigen Zahnkränzen 15 gezeigt, wobei sich deren Zähne 1 bis 8 in der Ebene des Zahnkranzes 15 erstrecken. Der Zahnkranz 15 gemäß Figur 3 weist Zähne 2 bis 8 auf, die gleich ausgebildet sind und mit gleichem Abstand voneinander beabstandet sind. Der Zahn 1 ist größer dimensioniert und weist zum Zahn 2 einen kleineren Abstand auf. Durch diese Unregelmäßigkeit wird ein anderer auswertbarer Impuls zur Positionserkennung von der Gabellichtschranke 16 erzeugt, der von der elektronischen Steuerungseinheit 14 weiterverarbeitet wird. Ein zeitlicher Ablauf t einer Umdrehung des Zahnkranzes 15 gemäß Figur 3 ist in den Figuren 4 und 5 für die beiden Drehrichtungen 20, 30 dargestellt.

Der Zahnkranz 15 gemäß Figur 6 weist die Zähne 2 bis 8 auf, die gleich ausgebildet sind und mit gleichem Abstand voneinander beabstandet sind. Der Zahn 1 ist in zwei kleinere Segmente unterteilt und weist zum Zahn 2 einen kleineren Abstand auf. Durch diese Unregelmäßigkeit wird ebenfalls ein auswertbarer Impuls zur Positionserkennung von der Gabellichtschranke 16 erzeugt, der von der elektronischen Steuerungseinheit 14 weiterverarbeitet wird. Der zeitliche Ablauf t einer Umdrehung des Zahnkranzes 15 gemäß Figur 6 ist in den Figuren 7 und 8 für die beiden Drehrichtungen 20, 30 dargestellt.

Nachstehend wird die Funktionsweise der Antriebseinheit 11 mit der Positionserfassungseinrichtung erläutert. Das Garagentor lässt sich durch Betätigung eines Schalters öffnen. Beim motorischen Öffnungsvorgang wird der Antriebsmotor 10 aktiviert, so dass das Getriebe 12 die Abtriebsachse 13 in Drehung versetzt. Während des Öffnungsvorganges registriert die Positionserfassungseinrichtung ständig die Position des Garagentores und schaltet beim Erreichen einer definierten Öffnungsposition über die elektronische Steuerungseinheit 14 den Antriebsmotor 10 ab. Die Öffnungsgeschwindigkeit und die Öffnungszeit lassen sich durch Verarbeitung der von der Positionserfassungseinrichtung gelieferten Daten bestimmen und durch Programmierung der elektronischen Steuerungseinheit 14 einstellen. Die elektronische Steuerungseinheit 14 wirkt dann entsprechend auf die Antriebseinheit 11. Der Schließvorgang erfolgt durch Aktivierung der Antriebseinheit 11 in umgekehrter Richtung. Dabei lassen sich die Schließgeschwindigkeit und die Schließzeit ebenfalls durch Verarbeitung der von der Positionserfassungseinrichtung gelieferten Daten bestimmen und einstellen. Durch die exakte Positionsbestimmung, d. h. durch Zählen und Speichern der Impulse, ist auch bei einer kurzzeitigen Störung des Bewegungsablaufes das ablaufgerechte Wiedereinsetzen bzw. Fortsetzen eines Bewegungszyklusses gewährleistet.

Das Funktionsprinzip der Positionserfassung beruht darauf, dass pro Umdrehung des Informationsträgers 15 ein in der zeitlichen Länge veränderter Impuls entsteht. Dieser Impuls wird durch die beispielsweise in den Figuren 3 und 6 dargestellten unregelmäßigen Abstände bzw. Zähne 1 des Zahnkranzes 15 erzeugt und gezählt. Die Ermittlung der Drehzahl erfolgt über die jeweilige gültige Flanke in Abhängigkeit von der Drehrichtung. Innerhalb einer festgelegten Toleranz der Drehzahl wird der zeitlich veränderte Impuls durch einen Filter erfasst. Ist dieser Impuls erfasst worden, wird die aktuelle Position kontrolliert und gegebenenfalls korrigiert. Durch zyklisches Abspeichern der Position, mindestens einmal pro Umdrehung, in einem nicht flüchtigen Speicher, ist die genaue Position auch nach einem Stromausfall wieder zu erfassen. Beim ersten Anlaufen wird die genaue Position durch eine Lernfahrt ermittelt.

## Patentansprüche

1. Antriebseinheit für ein Tor mit einem elektromechanischen Antriebsmotor (10), mit einem Getriebe (12), wobei mittels dessen Abtriebsachse (13) das Tor bewegt wird, mit einer Positionserfassungseinrichtung, bestehend aus einer elektronischen Steuerungseinheit (14) und einem Informationsgeber (17) und mit einem Informationsträger (15), der auf der Abtriebsachse (13) zentrisch angeordnet ist, an dessen Umfang beabstandete Informationsinhalte (2 bis 8) abgelegt sind, **dadurch gekennzeichnet, dass** mindestens ein ungleichmäßig beabstandeter Informationsinhalt (1) und/oder mindestens ein ungleichmäßig ausgebildeter Informationsinhalt (1) vorhanden ist, dass die elektronische Steuerungseinheit (14) ein Abtastsystem (16) aufweist, das mit dem Informationsträger (15) so zusammenwirkt, dass pro Umdrehung des Informationsträgers (15) ein in der zeitlichen Länge veränderter Impuls erfasst wird und in der elektronischen Steuerungseinheit (14) nicht flüchtig gespeichert und weiterverarbeitet wird, dass im nicht flüchtigen Speicher Betriebsparameter und Fahrprofile abgespeichert sind, und dass die Position der Endlagen des Tores über eine Lernfahrt ermittelt werden.

2. Antriebseinheit nach Anspruch 1, **dadurch gekennzeichnet, dass** sich die Informationsinhalte (1 bis 8) vom Informationsträger (15) abstehend und/oder abgewinkelt erstrecken.

3. Antriebseinheit nach einem der Ansprüche 1 oder 2, **dadurch gekennzeichnet, dass** der Informationsträger (15) ein Zahnkranz ist.

4. Antriebseinheit nach einem der Ansprüche 1 bis 3, **dadurch gekennzeichnet, dass** das Abtastsystem (16) eine Gabellichtschranke ist, durch dessen Schenkel (18) die Informationsinhalte (1 bis 8) des Informationsträgers (15) bewegt werden.

5. Antriebseinheit nach einem der Ansprüche 1 bis 4, **dadurch gekennzeichnet, dass** der Informationsgeber (17) aus einem Informationsträger (15) und dem Abtastsystem (16) besteht und mit der elektronischen Steuerungseinheit (14) einschließlich des Informationsträgers (15) als auswechselbares Modul an einer Seite der Abtriebsachse (13) angeordnet ist, während auf der anderen Seite der Abtriebsachse die Antriebsvorrichtung für das Tor angeordnet ist.

6. Antriebseinheit nach einem der Ansprüche 1 bis 5, **dadurch gekennzeichnet, dass** der Informationsträger (15) drehfest an der Abtriebsachse (13) angeordnet ist.

7. Antriebseinheit nach einem der Ansprüche 1 bis 6, **dadurch gekennzeichnet, dass** der Informationsträger (15) lösbar und auswechselbar an der Abtriebsachse (13) befestigt ist.

8. Verfahren zum Betrieb einer Antriebseinheit für ein Tor mit einem elektromechanischen Antriebsmotor (10), mit einem Getriebe (12) wobei mittels dessen Abtriebsachse (13) das Tor bewegt wird, mit einer Positionserfassungseinrichtung, bestehend aus einer elektronischen Steuerungseinheit und einem Informationsgeber (17) und einem Informationsträger (15), der auf der Abtriebsachse (13) zentrisch angeordnet ist, an dessen Umfang beabstandete Informationsinhalte (2 bis 8) abgelegt sind, wobei mindestens ein unregelmäßige beabstandeter Informationsinhalt (1) und/oder mindestens ein unregelmäßig ausgebildeter Informationsinhalt (1) vorhanden ist, dass die elektronische Steuerungseinheit (14) ein Abtastsystem (16) aufweist, das mit dem Informationsträger (15) so zusammenwirkt, dass pro Umdrehung des Informationsträgers (15) ein in der zeitlichen Länge veränderter Impuls erfasst wird und in der elektronischem Steuerungseinheit (14) nicht flüchtig gespeichert und weiterverarbeitet wird und dass im nicht flüchtigen Speicher Betriebsparameter und Farbprofile abgespeichert werden, und dass die Position der Endlagen des Tores über eine Lernfahrt ermittelt werden.

9. Verfahren nach Anspruch 8, **dadurch gekennzeichnet, dass** zur Ermittlung der Drehzahl des Antriebsmotors (10) jeweils eine gültige Flanke in Abhängigkeit von der Drehrichtung erfasst wird.

10. Verfahren nach einem der vorherigen Ansprüche, **dadurch gekennzeichnet, dass** die Flanke in einen Impuls umgewandelt wird und die aktuelle Position kontrolliert und ggf. korrigiert wird.

11. Verfahren nach einem der vorherigen Ansprüche, **dadurch gekennzeichnet, dass** durch zyklisches Abspeichern der Position mindestens einmal pro Umdrehung, in einem nicht flüchtigen Speicher die genaue Position, auch nach einem Stromausfall erfasst wird.

## Claims

1. A drive unit for a gate with an electro-mechanical drive motor (10), with a gear (12), wherein the gate is moved by means of the output shaft (13) of the gear, with a position detection device consisting of an electronic control unit (14) and an information transmitter (17) and an information carrier (15), which is centrically disposed on the output shaft (13) and has information content (2 to 8) placed and spaced-apart on its circumference, **characterized in that** at least one irregularly spaced-apart information content (1) and/or at least one irregularly configured information content (1) are/is provided, **in that** the electronic control unit (14) has a sensing system (16), which cooperates with the information carrier (15) such that, per each rotation of the information carrier (15), an impulse is detected, the length of time thereof being modified, and is stored in a non-volatile manner and is further processed in the electronic control unit (14), **in that** operating parameters and travel profiles are stored in the non-volatile memory, and **in that** the location of the terminal positions of the gate is determined by means of a learning run.

2. A drive unit according to claim 1, **characterized in that** the information content (1 to 8) extends from the information carrier (15) in a protruding and/or angled manner.

3. A drive unit according to one of the claims 1 to 2, **characterized in that** the information carrier (15) is a toothed wheel.

4. A drive unit according to one of the claims 1 to 3, **characterized in that** the sensing system (16) is a bifurcated light barrier, the information content (1 to 8) of the information carrier (15) being moved through the legs (18) of the light barrier.

5. A drive unit according to one of the claims 1 to 4, **characterized in that** the information transmitter (17) consists of an information carrier (15) and the sensing system (16) and is disposed together with the electronic control unit (14) including the information carrier (15) as an exchangeable module at one end of the output shaft (13), whereas the driving device for the gate is disposed at the other end of the output shaft.

6. A drive unit according to one of the claims 1 to 5, **characterized in that** the information carrier (15) is torque-proof disposed at the output shaft (13).

7. A drive unit according to one of the claims 1 to 6, **characterized in that** the information carrier (15) is attached to the output shaft (13) in a releasable and exchangeable manner.

8. A method for operating a drive unit for a gate with an electro-mechanical drive motor (10), with a gear (12), wherein the gate is moved by means of the output shaft (13) of the gear, with a position detection device consisting of an electronic control unit (14) and an information transmitter (17) and an information carrier (15), which is centrically disposed on the output shaft (3) and has information content (2 to 8) placed and spaced-apart on its circumference, wherein at least one irregularly spaced-apart information content (1) and/or at least one irregularly configured information content (1) are/is provided, in that the electronic control unit (14) has a sensing system (16), which cooperates with the information carrier (15) such that, per each rotation of the information carrier (15), an impulse is detected, the length of time thereof being modified, and is stored in a non-volatile manner and further processed in the control unit (14), and in that operating parameters and travel profiles are stored in the non-volatile memory, and in that the location of the terminal positions of the gate is determined by means of a learning run.

9. A method according to claim 8, **characterized in that**, depending on the direction of rotation, respectively one valid edge is detected for determining the rotational speed of the drive motor (10),

10. A method according to one of the preceding claims, **characterized in that** the edge is transformed into an impulse and that the current position is monitored and, if necessary, corrected.

11. A method according to one of the preceding claims, **characterized in that**, by cyclically storing the position at least once per rotation, the exact position is detected in a non-volatile memory, even after a power failure.

## Revendications

1. Unité d'entraînement pour un portail avec un moteur d'entraînement (10) électromécanique, avec un engrenage (12), dont l'arbre entraîné (13) déplace le portail, avec un dispositif de détection de positions consistant en une unité de contrôle électronique (14) et un transmetteur d'information (17) et avec un porteur d'information (15), qui est agencé sur l'arbre entraîné (13) de façon centrée, des contenus informatifs (2 à 8) étant placés sur la circonférence de celui-ci, **caractérisée en ce qu'**au moins un contenu informatif (1) écarté de façon irrégulière et/ou au moins un contenu informatif (1) aménagé de façon irrégulière sont prévus/est prévu, **en ce que** l'unité de contrôle électronique (14) possède un système de détection (16), qui coopère avec le porteur d'information (15) de telle façon que, pour chaque révolution du porteur d'information (15), une impulsion, dont la longueur de temps a été modifiée, est détectée, et sauvegardée de manière non-volatile et transformée dans une unité de contrôle électronique (14), **en ce que** des paramètres de fonctionnement et des profils de translation sont sauvegardés dans la mémoire non-volatile, et **en ce que** l'endroit des positions terminales du portail est déterminé par une course initiale d'application.

2. Unité d'entraînement selon la revendication 1, **caractérisée en ce que** les contenus informatifs (1 à 8) du porteur d'information (15) s'étendent en saillie et/ou de façon angulaire.

3. Unité d'entraînement selon l'une des revendications 1 ou 2, **caractérisée en ce que** le porteur d'information (15) est une roue dentée.

4. Unité d'entraînement selon l'une des revendications 1 à 3, **caractérisée en ce que** le système de détection (16) consiste en une barrière lumineuse fourchue, les contenus informatifs (1 à 8) du porteur d'information (15) avancent en passant par les branches (18) de la barrière lumineuse.

5. Unité d'entraînement selon l'une des revendications 1 à 4, **caractérisée en ce que** le transmetteur d'information (17) consiste en un porteur d'information (15) et le système de détection (16), et il est agencé sur une extrémité de l'arbre entraîné (13) avec l'unité de contrôle électronique (14), y compris le porteur d'information (15) en tant que module échangeable, tandis que le dispositif d'entraînement pour le portail est agencé sur l'autre extrémité de l'arbre entraîné.

6. Unité d'entraînement selon l'une des revendications 1 à 5, **caractérisée en ce que** le porteur d'information (15) est agencé sur l'arbre entraîné (13) de façon à résister à la torsion.

7. Unité d'entraînement selon l'une des revendications 1 à 6, **caractérisée en ce que** le porteur d'information (15) est attaché à l'arbre entraîné (13) de façon détachable et interchangeable.

8. Méthode pour opérer une unité d'entraînement pour un portail avec un moteur d'entraînement (10) électromécanique, avec un engrenage (12), dont l'arbre entraîné (13) déplace le portail, avec un dispositif de détection de positions consistant en une unité de contrôle électronique (14) et un transmetteur d'information (17) et avec un porteur d'information (15), qui est agencé sur l'arbre entraîné (13) de façon centrée, des contenus informatifs (2 à 8) étant placés sur la circonférence de celui-ci, au moins un contenu informatif (1) étant écarté de façon irrégulière et/ou au moins un contenu informatif (1) étant aménagé de façon irrégulière sont prévus/est prévu, en ce que l'unité de contrôle électronique (14) possède un système de détection (16), qui coopère avec le porteur d'information (15) de telle façon que pour chaque révolution du porteur d'information (15) une impulsion, dont la longueur de temps a été modifiée, est détectée, et sauvegardée de manière non-volatile et transformée dans l'unité de contrôle électronique (14), en ce que des paramètres de fonctionnement et des profils de translation sont sauvegardés dans la mémoire non-volatile, et en ce que l'endroit des positions terminales du portail est déterminé par une course initiale d'application.

9. Méthode selon la revendication 8, **caractérisée en ce que** respectivement un flanc valide est détecté en fonction du sens de rotation pour déterminer le nombre de révolutions du moteur d'entraînement (10).

10. Méthode selon l'une des revendications précédentes, **caractérisée en ce que** le flanc est transformé en une impulsion et **en ce que** la position actuelle est surveillée et corrigée le cas échéant.

11. Méthode selon l'une des revendications précédentes, **caractérisée en ce que**, en sauvegardant la position de façon cyclique au moins une fois par révolution, la position exacte est détectée dans une mémoire non-volatile, même après une coupure de courant.
